# EUROPEAN PATENT SPECIFICATION

(11) **EP 0 985 816 B1**
(45) Date of publication and mention of the grant of the patent: **30.11.2005**
(21) Application number: 99117718.9
(22) Date of filing: 08.09.1999
(51) Int. Cl.: F02F 1/42, F02B 23/10

(54) **In-cylinder injection type of engine**
Direkteingespritze Brennkraftmaschine
Moteur à combustion interne à injection directe

(30) Priority: 08.09.1998 JP 25356798
(43) Date of publication of application: 15.03.2000
(73) Proprietor: YAMAHA HATSUDOKI KABUSHIKI KAISHA, Iwata-shi Shizuoka-ken, 438 (JP)
(72) Inventor: Yonezawa, Minoru, c/o Yamaha Hatsudoki K.K., Iwata-shi, Shizuoka-ken, 438 (JP); Kinoshita, Yuji, c/o Yamaha Hatsudoki K.K., Iwata-shi, Shizuoka-ken, 438 (JP)
(74) Representative: Grünecker, Kinkeldey, Stockmair & Schwanhäusser Anwaltssozietät

(56) References cited:
- EP-A- 0 464 594
- EP-A- 0 879 942
- DE-A- 19 705 023
- JP-A- 8 177 500
- JP-A- 9 125 964
- JP-A- 55 164 723
- US-A- 4 278 057
- US-A- 4 574 754
- US-A- 5 775 288

## Description

This invention relates to an in-cylinder injection type of engine according to the preamble portion of claim 1 in which a through hole for inserting a fuel injection pipe of an injector is bored in a recess for forming a combustion chamber of a cylinder head with the through hole axis being tilted relative to the inside wall surface of the recess.

A conventional example of this type of in-cylinder injection type of engine is disclosed in the laid-open Japanese patent application No. Hei-9-209761 published in a gazette.

In the in-cylinder injection type of engine shown in the gazette, a through hole is bored in the combustion chamber forming recess of the cylinder head in a position that is outer with respect to the radius of the cylinder. A fuel injection pie of an injector is inserted into the through hole.

The through hole is tilted so as to be away from the cylinder head bottom surface (the surface in contact with the cylinder block) along its length from the combustion chamber side opening outward relative to the radius of the cylinder. That is, the through hole is tilted so that its axis is tilted relative to the inside wall surface of the recess for forming the combustion chamber.

The cylinder head is secured to the cylinder block using head bolts at four positions around the combustion chamber. Thermal expansion of the cylinder head when the engine is operated causes compression stresses directed toward the cylinder axis in the combustion forming recess of the cylinder head. Therefore, when the through hole is bored in the combustion forming recess as described above, a problem of stress concentration occurs in a position that is at the edge of the combustion chamber side end opening of the through hole and on the outer side with respect to the radius of the cylinder.

The stress concentration occurs because part of the opening in the cylinder head including the outer (Circumferential side of the cylinder is of a pointed, acute-angled shape in cross section.

Since the stress concentration portion is fatigued extremely by repeated expansion and contraction as a result of repeated operation and stop of the in-cylinder injection type of engine, extended periods of use of the engine provided with the cylinder head bored with the through hole might result in cracks in the cylinder head starting from the stress concentration area.

From JP 08-177500 there is known a cylinder head for an in-cylinder injector type engine, wherein an injector is installed between the intake ports and the cylinder head bottom surface, and wherein same injector is tilted with respect to an inside wall surface of the recess forming the combustion chamber of the cylinder head. Therein, the injector is provided within a through hole formed in the cylinder head. Moreover, an outer edge in the cylinder radius direction of the combustion chamber side opening of the through hole accommodating the injector is provided in a distance to the upper end surface of the cylinder block when looking in the cylinder axis direction. The attachment hole for the injector is provided at a certain distance to the upper end surface of the cylinder bore, as seen in the cylinder axis direction. Thus, part of the surface of the recess of the combustion chamber is arranged between the attachment hole and the cylinder bore. This part of the surface of the recess mainly extends in the cylinder radial direction. And, the outer end edge of said surface of the recess forming the combustion chamber is directly adjacent to an inner edge of the upper end surface of the cylinder bore.

Further, JP 09-125964 A discloses an in-cylinder injection spark ignition type engine having an auxiliary combustion chamber, wherein an injector and a spark plug are commonly arranged within said auxiliary combustion chamber, and wherein same auxiliary combustion chamber is used for mixing fuel injected to said auxiliary combustion chamber with air. Thus, the injector is to be provided remotely from the intake valve.

In addition, JP 55-164723 A refers to an in-cylinder injection type engine, wherein an injector and a spark plug are arranged in the cylinder head. The injector is provided in a through hole in the cylinder head, wherein an end edge on the inner side of the through hole is provided in the cylinder axis direction in a distance to the upper end surface of the cylinder block.

Further in-cylinder injection type engines are disclosed in US 4,278,057, DE 197 05 023 A1 and US 4,574,754.

It is an objective of the present invention to provide an in-cylinder injection type of engine as indicated above which with simple technical means prevents the occurrence of stress concentration at the opening of the through hole as well as cracks from appearing in the cylinder head even after extended periods of extended operation.

This objective is solved by an in-cylinder injection type of engine having the features of claim 1.

Accordingly, the surface formed to extend in the cylinder axis direction is made as part of a true circle as seen in the cylinder axis direction. Thus, it is possible to shift the position of the injector toward the outer side in the direction of the radius of the cylinder on the cylinder head bottom surface side and to make a large space available for forming the intake port.

Preferably, according to claim 2, the end edge at the combustion chamber side opening of the through hole on the outer side relative to the cylinder radius is provided at an end surface formed to extend in the cylinder axis direction in the cylinder head. With this configuration, the pointed distal end of the opening on the outer side in the direction of the radius of the cylinder is eliminated. As a result, stress concentration occurring at part of the opening on the cylinder periphery side due to thermal expansion of the cylinder head when the engine is operated is alleviated.

Further preferably, according to claim 3, the end surface formed to extend in the cylinder axis direction is made in the shape of a true circle as seen in the cylinder axis direction. With this configuration, the pointed edge as seen in the cylinder axis direction is eliminated from the end edge on the outer side in the direction of the radius of the cylinder at the combustion chamber side opening of the through hole for inserting the fuel injection pipe.

According to a further embodiment according to claim 4, an opening edge of a gasket interposed between the cylinder head and a cylinder block, corresponding to the cylinder bore is formed to be located outside the surface formed to extend in the cylinder axis direction in the cylinder head relative to the cylinder radius direction. Since the opening edge of the gasket is exposed to the combustion chamber through the gap formed between the cylinder head and the cylinder block, the gasket is prevented from being exposed to flames when the engine is operated. This is based on the fact that flames do not enter the small gap in the cylinder.

According to still a further embodiment according to claim 5, the distal end edge of the fuel injection pipe of the injector is positioned to be in agreement with the cylinder axis side end edge of the combustion chamber side opening of the through hole for inserting the fuel injection pipe. Thus, the distal end of the fuel injection pipe is made less likely to be exposed to the flames when the engine is operated while positioning the distal end as close to the combustion chamber as practicable.

Other advantageous embodiments of the present invention are laid down in further dependent claims.

In the following, the present invention is explained in greater detail with respect to several embodiments thereof in conjunction with the accompanying drawings, wherein:
FIG. 1 is a view as seen from under a cylinder head of the in-cylinder injection type of engine of an embodiment,
FIG. 2 shows a cross section II-II of the cylinder head shown in FIG. 1.
FIG. 3 is an enlarged view as seen from under an opening area of the through hole for inserting a fuel injection pipe, and
FIG. 4 is an enlarged cross-sectional view of an essential part.

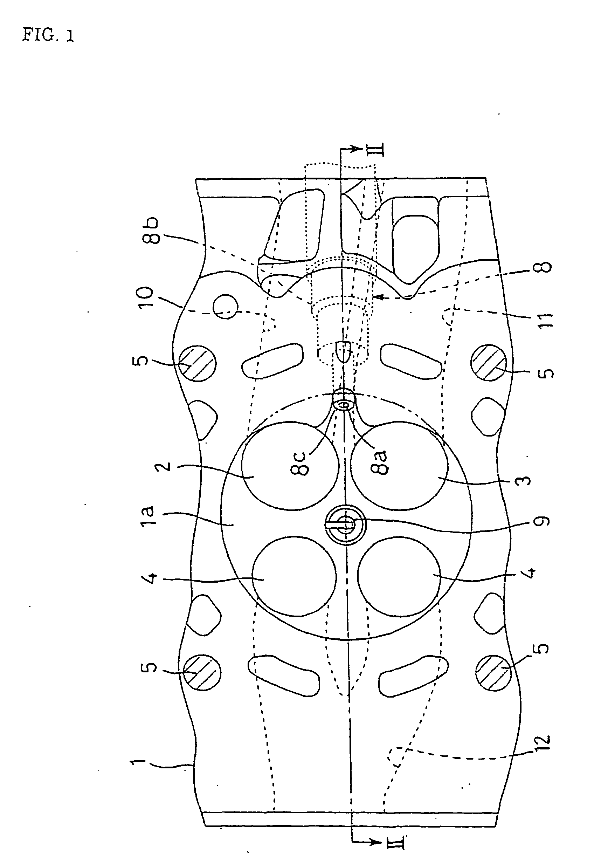

An embodiment of the in-cylinder injection type of engine will be hereinafter described in detail in reference to appended drawings, FIGs. 1 to 4.

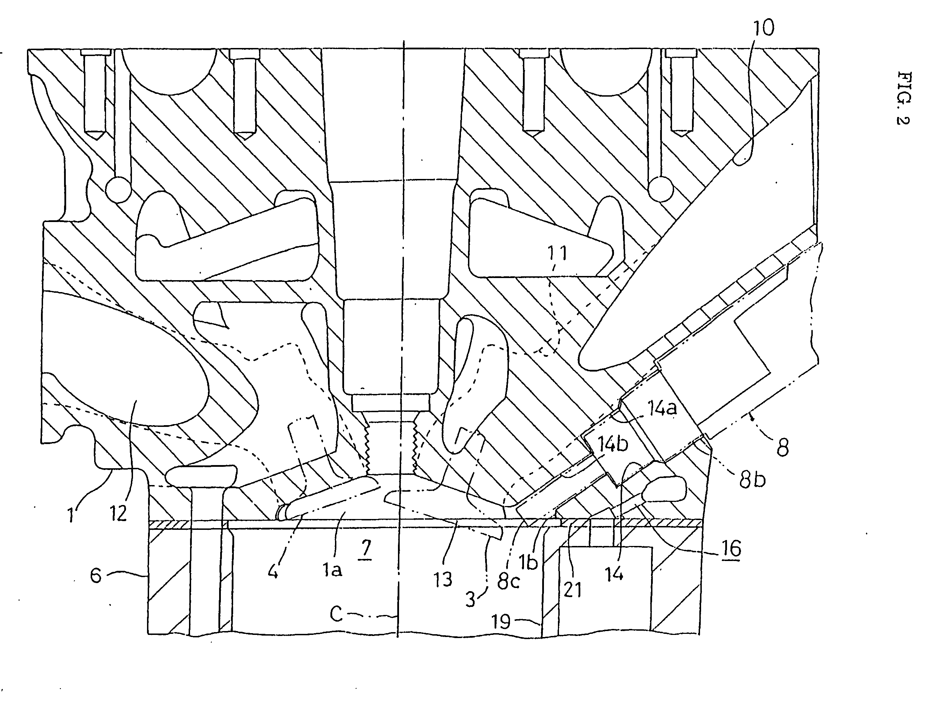

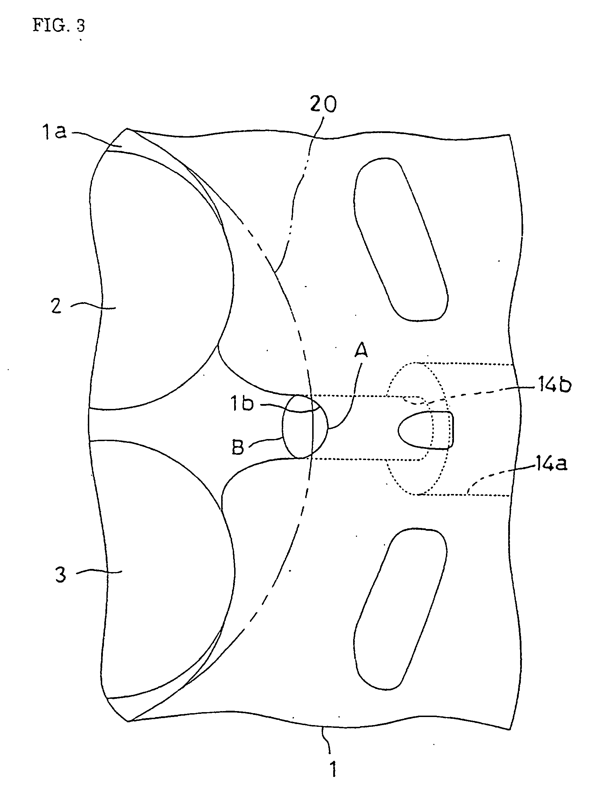

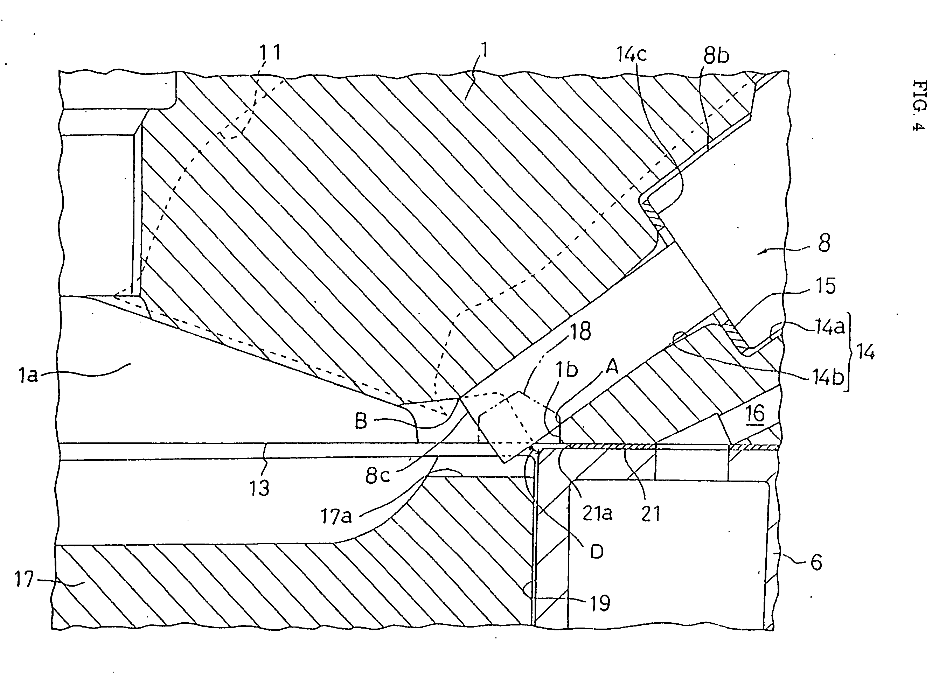

FIG. 1 is a view seen from under a cylinder head of the in-cylinder injection type of engine. FIG. 2 shows a cross section II-II of the cylinder head shown in FIG. 1. FIG. 3 is an enlarged view as seen from under of an opening area of the through hole for inserting a fuel injection pipe. FIG. 4 is an enlarged cross-sectional view of an essential part.

In these drawings, the symbol 1 denotes a cylinder head of this embodiment. The cylinder head 1 is for use in an in-cylinder injection engine of a DOHC type with four cylinders, with every cylinder provided with two intake valves 2, 3 and two exhaust valves 4, 4, and is secured as shown in FIG. 2 to a cylinder block 6 using head bolts 5 shown in FIG. 1. The head bolts 5 are used in four positions around the combustion chamber forming recess 1a of the cylinder head 1.

An injector 8 for injecting fuel directly into a combustion chamber 7 (See FIG. 2) is attached as shown in FIG. 1 so that its fuel injection nozzle 8a is located between the two intake valves 2, 3. The cylinder head 1 is also provided with an ignition plug 9 in a position displaced from the cylinder axis toward the exhaust valve 4.

The intake valves 2, 3 and the exhaust valves 4 are driven with a valve driving device (not shown) disposed on the cylinder head 1. The valve driving device is of a conventionally known constitution with its components housed in a valve drive cam chamber formed between the cylinder head 1 and a head cover (not shown).

The cylinder head 1 is formed with intake ports 10, 11 for each intake valve. The exhaust ports 12 are joined together through an exhaust passage for each cylinder in the cylinder head 1.

The injector 8 is attached to the cylinder head 1 as shown in FIG. 1 with its axial line normal to the camshaft axis (up-down direction in FIG. 1) as seen in the cylinder axis direction, with its fore-end directed to the cylinder axis. Also as shown in FIG. 2, the injector 8 is attached with a tilt relative to the cylinder axis shown with a dash-and-dotted line C in the figure between the intake ports 10, 11 and the cylinder head bottom surface 13 as seen in the camshaft axis direction. The injector 8 comprises a fuel injection pipe 8c which is of a relatively small diameter and is attached to the fore-end of a tubular, valve holding section 8b. The fuel injection pipe 8c is disposed to project into the combustion chamber 7.

The injector 8 is attached to the cylinder head 1 as shown in FIG. 2 by fitting the valve holding section 8b into an injector attachment hole 14 bored in the side portion of the cylinder head and by tightening securing bolts (not shown) into the cylinder head 1. The hole 14 constitutes the through hole related to the invention.

The hole 14 for attaching the injector 8 consists of a large diameter portion 14a for fitting the valve holding portion 8b of the injector 8 and a small diameter portion 14b for passing the fuel injection pipe 8c, with the fore-end opening of the small diameter portion 14b being open to the combustion chamber forming recess 1a of the cylinder head 1. That is to say, the hole 14 is bored in the combustion chamber forming recess 1a in such a way that its axis is tilted relative to the inside wall surface of the combustion chamber forming recess 1a. Incidentally, as shown in FIG. 4, a seal member 15 is interposed in the gap between the end surface 14c of the step between the large diameter portion 14a and the small diameter portion 14b and the valve holding portion 8b of the injector 8. in this embodiment, a cooling water passage 16 is formed between the hole 14 in the cylinder head 1 and the cylinder block 6 so as to cool the injector 8 with cooling water.

The opening on the combustion chamber side of the small diameter portion 14b is formed as shown in FIG. 3 so that its outer side end edge in the cylinder radius direction forms part of a true circle as seen in the cylinder axis direction and that its end edge on the cylinder axis side is connected to the inside wall surface of the combustion chamber forming recess 1a. In FIGs. 3 and 4, the end edge of the opening that forms part of a true circle is indicated with a symbol A and the end edge on the cylinder axis side with a symbol B.

As shown in FIG. 4, the injector 8 is attached to the cylinder head 1 with the fore-end edge of the fuel injection pipe 8c positioned at the end edge B. When the injector, 8 is attached as described above, part of the fore-end of the fuel injection pipe 8c projects beyond the cylinder head bottom surface 13 toward the cylinder block 6. In this embodiment, the top of a piston 17 is formed with a recess 17a of a semicircular cross section to avoid interference of the projection with the piston 17. The recess 17a is formed to extend radially in part of the top land of the piston 17 facing the fuel injection pipe 8c.

The end edge A is connected as shown in FIG. 4 to an end surface 1 b formed in the combustion chamber forming recess 1 a so as to extend in the cylinder axis direction. The end surface 1b is machined with a drill. The drill in the state of forming the end surface 1b is indicated with a dash-and-double-dotted line 18 in FIG. 4. The work of forming the end surface 1b with the drill 18 is done by pressing the drill 18 against the combustion chamber forming recess 1a from the cylinder block 6 side with the drill 18 being parallel to the cylinder axis C. In other words, the opening end edge A as seen in the cylinder axis direction is part of a true circle when the end surface 1b is formed as described above using the drill 18.

In this embodiment, the end surface 1b is formed as shown in FIG. 4 in a radially outer position than the inside circumferential wall 19 of the cylinder. In other words, as shown in FIG. 3, it is formed outside the cylinder bore 20 indicated with a dash-and-double-dotted line in FIG. 3. As shown in FIG. 4, a gasket 21 disposed between the cylinder head 1 and the cylinder block 6 is formed so that its opening edge 21a corresponding to the cylinder bore 20 is located on the outer side, in the direction of cylinder radius of the end surface 1b.

Forming the end surface 1b as described above in the cylinder head 1 makes it possible to eliminate a pointed edge from part of the cylinder head 1 corresponding to the end edge A. As a result, thermal stresses are alleviated that are produced in part of the above-mentioned opening on the cylinder periphery side by the expansion of the cylinder head 1 as it is heated when the engine is operated.

As the stress concentration in part of the opening on the cylinder periphery side is prevented, that part of the cylinder head 1 is not fatigued even if the cylinder head 1 repeats expansion and contraction by the heat of the engine operation. As a result, cracks do not occur in that part of the opening on the cylinder periphery side even if the in-cylinder injection type of engine provided with the cylinder head 1 is used for extended periods of time.

Since the end surface 1b is formed as part of a true cylinder as seen in the cylinder axis direction, the pointed fore-end edge is eliminated from the end edge A also as seen in the cylinder axis direction. As a result, it is possible to make the stress concentration more unlikely to occur.

Moreover, since the end surface 1b is positioned outside the cylinder bore 20 as seen in the cylinder axis direction, the position of the injector 8 can be shifted toward outside in the cylinder radius direction on the cylinder head bottom surface 13 side. As a result, it is possible to make a large space available for forming the intake ports 10, 11. This increases the degree of freedom in designing the shape of the intake ports 10, 11.

Furthermore, since the opening edge 21a, of the gasket 21 interposed between the cylinder head 1 and the cylinder block 6, corresponding to the cylinder bore 20 is formed to be located outside the end surface 1b in the cylinder radius direction, the opening edge 21a of the gasket 21 is exposed to the combustion chamber 7 through a gap formed between the cylinder head 1 and the cylinder block 6, so that the gasket 21 is prevented from being exposed to flames when the engine is operated. This is based on the fact that flames do not enter the small gap in the cylinder.

In addition to that, since the fore-end edge of the fuel injection pipe 8c is positioned at the end edge B of the small diameter portion 14b of the fuel injection pipe insertion hole 14, the fore-end edge of the fuel injection pipe 8c is made less likely to be exposed to flames when the engine is operated while positioning the fore-end edge of the fuel injection pipe 8c as close to the combustion chamber 7 as possible. This constitution also makes the fore-end edge of the fuel injection pipe 8c face the cylinder block 6 through a tiny gap D as shown in FIG. 4, so that the end surface 1b is exposed to the combustion chamber 7 through the gap D. In other words, the end edge A of the end surface 1b and the hole 14 is non exposed to flames in the cylinder when the engine is operated.

Therefore, the surface of the end edge A is prevented from being directly heated with flames and from being damaged, and a state can be maintained in which minute recesses that can start cracks are not present.

Incidentally, while an example embodiment is described above in which the end surface 1b of the cylinder head 1 is formed to extend in a straight line in the cylinder axis direction, the end surface 1b may also be formed in an arcuate shape to curve out toward the inside of the cylinder. Forming the end surface 1b in an arcuate shape further makes cracks less likely to occur.

With the teaching of the present invention described above, since the pointed corner can be eliminated from part of the end edge of the opening of the through hole for inserting the fuel injection pipe on the outer side in the cylinder radius direction, stresses produced in that part of the opening on the cylinder periphery side due to thermal expansion of the cylinder head when the engine is operated can be relaxed.

Therefore, stresses are prevented from concentrating in part of the opening on the cylinder periphery side, making it possible to provide an in-cylinder injection type of engine free from cracks in the cylinder head even after an extended period of use.

According to another embodiment, a pointed fore-end edge as seen in the cylinder axis direction can be eliminated from part of the end edge of the opening of the fuel injection pipe insertion hole on the outer side in the cylinder radius direction.

As a result, stress concentration is prevented more securely.

With a further embodiment, the injector can be positioned on the outer side in the cylinder radius direction on the cylinder head bottom surface side, so that a wide space can be made available for forming the intake port.

As a result, the degree of freedom in designing the intake port shape is increased, and the intake port can be formed in an ideal shape to improve the output of the engine.

With still a further embodiment, since the opening edge of the gasket corresponding to the cylinder bore is exposed to the combustion chamber through the gap formed between the cylinder head and the cylinder block, the gasket is prevented from being exposed to flames when the engine is operated.

Therefore, the gasket is securely prevented from being damaged.

With another embodiment, it is possible to make the fore-end of the fuel injection pipe of the injector less likely to be exposed to flames when the engine is operated while positioning the fore-end as close to the combustion chamber as possible.

As a result, it is possible to prevent the fuel injection pipe from being damaged during operation of the engine while employing a constitution that permits efficient injection of fuel from the fuel injection pipe into the combustion chamber.

## Claims

1. An in-cylinder injection type of engine in which a through hole (14) for inserting a fuel injection pipe (8c) of an injector (8) is bored in a recess (1a) for forming a combustion chamber (7) of a cylinder head (1) with the through hole axis being tilted relative to the inside wall surface of the recess (1a), wherein the injector (8) is attached with a tilt relative to a cylinder axis (C) between intake ports (10,11) and a cylinder head bottom surface (13), and an end edge (A) at the combustion chamber side opening of the through hole (14) on the outer side relative to the cylinder is provided in the cylinder axis direction in a distance to the upper end of a cylinder block (6), **characterized in that** an end surface (1b) formed in the recess (1a) for forming a combustion chamber (7) to extend in the cylinder axis direction is located outside a cylinder bore (20) as seen in the cylinder axis direction.

2. In-cylinder injection type of engine according to claim 1 **characterized in that** the end edge (A) at the combustion chamber side opening of the through hole (14) on the outer side relative to the cylinder radius is provided at an end surface (1b) formed to extend in the cylinder axis direction in the cylinder head (1).

3. In-cylinder injection type of engine according to claim 1 or 2, **characterized in that** the end surface (1b) formed to extend in the cylinder axis direction is made in the shape of part of a true circle as seen in the cylinder axis direction.

4. In-cylinder injection type of engine according to at least one of claims 1 to 3, **characterized in that** an opening edge of a gasket (21) interposed between the cylinder head (1) and a cylinder block (6), corresponding to the cylinder bore (20) is formed to be located outside the end surface (1 b) formed to extend in the cylinder axis direction in the cylinder head (1) relative to the cylinder radius direction.

5. In-cylinder injection type of engine according to one of the claims 1 to 4, **characterized in that** the distal end edge of the fuel injection pipe (8c) of the injector (8) is positioned to be in agreement with the cylinder axis side end edge of the combustion chamber side opening of the through hole (14) for inserting the fuel injection pipe (8c).

6. In-cylinder injection type of engine according to at least one of the claims 1 to 5, **characterized in that** a or each cylinder is provided with two intake valves (2,3) and that a fuel injection nozzle (8a) is provided between said two intake valves (2,3).

7. in-cylinder injection type of engine according to at least one of the claims 1 to 6, **characterized in that** the through hole (14) being provided with a small diameter portion (14b) adjacent the combustion chamber (7) followed by a large diameter portion (14a).

8. In-cylinder injection type of engine according to claim 7, **characterized in that** an end surface (14c) of the step between the small and large diameter portions (14b, 14a) being provided with a seal member (15).

9. in-cylinder injection type of engine according to at least one of the claims 1 to 8, **characterized in that** the top of a piston (17) being provided with a recess (17a) of a semicircular cross section to prevent interference of the fuel injection pipe (8c) with the piston (17).

10. In-cylinder injection type of engine according to at least one of the claims 1 to 9, **characterized in that** the engine is of the DOHC type having four cylinders.

## Patentansprüche

1. Motor vom In- Zylinder- Einspritztyp, in dem eine Durchgangsbohrung (14) für das Einsetzen eines Kraftstoffeinspritzrohres (8c) eines Einspritzers (8) in einer Aussparung (1a) gebohrt ist, um eine Brennkammer (7) eines Zylinderkopfes (1) zu bilden, wobei die Durchgangsbohrungsachse relativ zu der Innenwandoberfläche der Aussparung (1a) geneigt ist, wobei der Einspritzer (8) mit einer Neigung relativ zu einer Zylinderachse (C) zwischen den Einlassöffnungen (10, 11) und einer Zylinderkopfunterseite (13) verbunden ist, und eine Endkante (A) an der brennkammerseitigen Öffnung der Durchgangsbohrung (14) an der Außenseite relativ zu dem Zylinder in Richtung der Zylinderachse in einem Abstand zu dem oberen Ende eines Zylinderblocks (6) vorgesehen ist, **dadurch gekennzeichnet, dass** eine Endoberfläche (1b), die in der Aussparung (1a) gebildet ist, um eine Brennkammer (7) zu bilden, so dass sie sich in der Richtung der Zylinderachse erstreckt, außerhalb einer Zylinderbohrung (20) angeordnet ist, wenn in Richtung der Zylinderachse gesehen wird.

2. Motor vom In- Zylinder- Einspritztyp nach Anspruch 1, **dadurch gekennzeichnet, dass** die Endkante (A) an der Brennkammerseitigen Öffnung der Durchgangsbohrung (14) an der Außenseite relativ zu dem Zylinderradius an einer Endoberfläche (1 b) vorgesehen ist, gebildet, um sich in Richtung der Zylinderachse in dem Zylinderkopf (1) zu erstrecken.

3. Motor vom In- Zylinder- Einspritztyp nach Anspruch 1 oder 2, **dadurch gekennzeichnet, dass** die Endoberfläche (1b), gebildet um sich in der Richtung der Zylinderachse zu erstrecken, in der Form eines Teiles eines echten Kreises gemacht ist, wenn in Richtung der Zylinderachse gesehen wird.

4. Motor vom In- Zylinder- Einspritztyp nach zumindest einem der Ansprüche 1 bis 3, **dadurch gekennzeichnet, dass** eine Öffnungskante einer Dichtung (21), eingesetzt zwischen den Zylinderkopf (1) und einem Zylinderblock (6), die der Zylinderbohrung (20) entspricht, gebildet ist, um außerhalb der Endoberfläche (1 b) angeordnet zu sein, gebildet, um sich in der Richtung der Zylinderachse in dem Zylinderkopf (1) relativ zu der Richtung der Zylinderachse zu erstrecken.

5. Motor vom In- Zylinder- Einspritztyp nach einem der Ansprüche 1 bis 4, **dadurch gekennzeichnet, dass** die vorauslaufende Endkante des Kraftstoffeinspritzrohres (8c) des Einspritzers (8) positioniert ist, um in Übereinstimmung mit der Endkante der Zylinderachsenseite der brennkammerseitigen Öffnung der Durchgangsbohrung (14) zu sein, um das Kraftstoffeinspritzrohr (8c) einzusetzen.

6. Motor vom In- Zylinder- Einspritztyp nach zumindest einem der Ansprüche 1 bis 5, **dadurch gekennzeichnet, dass** ein oder jeder Zylinder mit zwei Einlassventilen (2, 3) versehen ist und dass eine Kraftstoffeinspritzdüse (8a) zwischen den zwei Einlassventilen vorgesehen ist.

7. Motor vom In- Zylinder- Einspritztyp nach zumindest einem der Ansprüche 1 bis 6, **dadurch gekennzeichnet, dass** die Durchgangsbohrung (14) mit einem Abschnitt (14b) mit kleinem Durchmesser, benachbart der Brennkammer (7), gefolgt durch einen Abschnitt (14a) mit großem Durchmesser, versehen ist.

8. Motor vom In- Zylinder- Einspritztyp nach Anspruch 7, **dadurch gekennzeichnet, dass** eine Endoberfläche (14c) der Stufe zwischen den Durchmesserabschnitten (14b, 14a) mit kleinem und großem Durchmesser mit einem Dichtungsteil (15) versehen sind.

9. Motor vom In- Zylinder- Einspritztyp nach zumindest einem der Ansprüche 1 bis 8, **dadurch gekennzeichnet, dass** die Oberseite eines Kolbens (17) mit einer Aussparung (17a) mit einem halbkreisförmigen Querschnitts versehen ist, um eine Störung des Kraftstoffeinspritzrohres (8c) mit dem Kolben (17) zu vermeiden.

10. Motor vom In- Zylinder- Einspritztyp nach zumindest einem der Ansprüche 1 bis 9, **dadurch gekennzeichnet, dass** der Motor- Typ mit zwei obenliegenden Nockenwellen ist, der vier Zylinder hat.

## Revendications

1. Moteur à combustion interne de type à injection directe dans lequel un trou traversant (14) destiné à l'introduction d'une tubulure d'injection de carburant (8c) d'un injecteur (8) est alésé dans un retrait (1a) afin de former une chambre de combustion (7) d'une culasse (1), l'axe du trou traversant étant incliné par rapport à la surface de paroi intérieure du retrait (1a), dans lequel l'injecteur (8) est fixé avec une certaine inclinaison par rapport à un axe de cylindre (C) entre des orifices d'admission (10, 11) et une surface d'embase de culasse (13), et un bord d'extrémité (A) à l'ouverture du côté de la chambre de combustion du trou traversant (14) sur le côté externe par rapport au cylindre est aménagé dans la direction de l'axe de cylindre à une certaine distance de l'extrémité supérieure du bloc cylindres (6), **caractérisé en ce qu'**une surface d'extrémité (1b) formée dans le retrait (1a) destinée à former une chambre de combustion (7) de manière à s'étendre dans la direction de l'axe de cylindre est positionnée à l'extérieur d'un alésage de cylindre (20) lorsqu'elle est vue dans la direction de l'axe de cylindre.

2. Moteur à combustion interne de type à injection directe selon la revendication 1, **caractérisé en ce que** le bord d'extrémité (A) à l'ouverture du côté de la chambre de combustion du trou traversant (14) sur le côté externe par rapport au rayon de cylindre est aménagé à une surface d'extrémité (1b) formée de manière à s'étendre dans la direction de l'axe de cylindre dans la culasse (1).

3. Moteur à combustion interne de type à injection directe selon la revendication 1 ou la revendication 2, **caractérisé en ce que** la surface d'extrémité (1b) formée de manière à s'étendre dans la direction de l'axe de cylindre a la forme d'une partie de cercle vrai lorsqu'elle est vue dans la direction de l'axe de cylindre.

4. Moteur à combustion interne de type à injection directe selon au moins l'une des revendications 1 à 3, **caractérisé en ce qu'**un bord d'ouverture d'un joint (21) disposé entre la culasse (1) et un bloc cylindres (6) correspondant à l'alésage de cylindre (20) est formé de manière à être positionné à l'extérieur de la surface d'extrémité (1b) formée de manière à s'étendre dans la direction de l'axe de cylindre dans la culasse (1) par rapport à la direction de rayon de cylindre.

5. Moteur à combustion interne de type à injection directe selon l'une des revendications 1 à 4, **caractérisé en ce que** le bord d'extrémité distal de la tubulure d'injection de carburant (8c) de l'injecteur (8) est positionné de manière à être en concordance avec le bord d'extrémité du côté de l'axe de cylindre de l'ouverture du côté de la chambre de combustion du trou traversant (14) afin d'introduire la tubulure d'injection de carburant (8c).

6. Moteur à combustion interne de type à injection directe selon au moins l'une des revendications 1 à 5, **caractérisé en ce qu'**un cylindre ou chaque cylindre comporte deux soupapes d'admission (2, 3) et **en ce qu'**une buse d'injection de carburant (8a) est disposée entre lesdites deux soupapes d'admission (2, 3).

7. Moteur à combustion interne de type à injection directe selon au moins l'une des revendications 1 à 6, **caractérisé en ce que** le trou traversant (14) comporte une partie à petit diamètre (14b) située à proximité de la chambre de combustion (7) suivie d'une partie à grand diamètre (14a).

8. Moteur à combustion interne de type à injection directe selon la revendication 7, **caractérisé en ce qu'**une surface d'extrémité (14c) de l'étagement situé entre les parties à petit et à grand diamètre (14b, 14a) comporte un élément d'étanchéité (15).

9. Moteur à combustion interne de type à injection directe selon au moins l'une des revendications 1 à 8, **caractérisé en ce que** la tête d'un piston (17) comporte un retrait (17a) ayant une coupe transversale semi-circulaire afin d'empêcher une interférence de la tubulure d'injection de carburant (8c) avec le piston (17).

10. Moteur à combustion interne de type à injection directe selon au moins l'une des revendications 1 à 9, **caractérisé en ce que** le moteur à combustion interne est du type à double arbre à cames en tête (DOHC) et comprend quatre cylindres.
